# EUROPEAN PATENT APPLICATION

(11) **EP 4 851 972 A1**
(43) Date of publication of application: **09.12.2026**
(21) Application number: 26182301.7
(22) Date of filing: 01.06.2026
(51) Int. Cl.: G08G 5/22, G08G 5/26, G08G 5/32, G08G 5/34, G08G 5/53, G08G 5/55, G08G 5/57, G08G 5/59

(54) **METHOD AND APPARATUS FOR PLANNING FLIGHT PATH OF UNMANNED AERIAL VEHICLE, DEVICE, AND STORAGE MEDIUM**

(30) Priority: 05.06.2025 CN 202510749266
(71) Applicant: Autel Robotics Co., Ltd., Shenzhen, Guangdong 518000 (CN)
(72) Inventor: FENG, Yinhua, Shenzhen, Guangdong, 518000 (CN)
(74) Representative: Gulde & Partner

(57) **Abstract**

A method, an apparatus, a device, and a storage medium for flight path planning of an unmanned aerial vehicle (UAV) are provided. The method includes verifying a relative positional relationship between a current flight path point and an authorized zone, wherein the authorized zone has a higher authorization level than a no-fly zone. The method further includes determining the current flight path point as a flyable path point in response to the current flight path point satisfying a first authorization positional condition, wherein the condition includes that the current flight path point is located within the authorized zone and that a distance between the current flight path point and a boundary of the authorized zone is greater than or equal to a boundary distance threshold. The method enables determination of flyable path points based on spatial authorization constraints, thereby improving UAV flight safety and ensuring compliance with airspace authorization requirements.

## Description

### TECHNICAL FIELD

This application relates to the field of unmanned aerial vehicle technologies, and in particular, to a method and an apparatus for planning a flight path of an unmanned aerial vehicle, a device, and a storage medium.

### BACKGROUND

With rapid development of science and technology, unmanned aerial vehicles have been widely used in various fields. The unmanned aerial vehicles can replace humans to perform aerial photography, transportation, rescue, inspection, and the like, which can improve task efficiency.

When the unmanned aerial vehicle is performing a task, path selection is critical to both task success and flight safety. Appropriate flight path planning can ensure that the unmanned aerial vehicle avoids an obstacle during flight, thereby reducing an accident risk, and improving task performing efficiency. Therefore, it is necessary to perform unmanned aerial vehicle path planning.

### SUMMARY

This application provides a method and an apparatus for planning a flight path of an unmanned aerial vehicle, a device, and a storage medium, to perform unmanned aerial vehicle path planning.

According to a first aspect, a method for planning a flight path of an unmanned aerial vehicle is provided, including:
verifying a relative position relationship between a current flight path point of the unmanned aerial vehicle and an authorized zone, where permission of the authorized zone is higher than permission of a no-fly zone; and
determining the current flight path point as a flyable path point in a case that the current flight path point conforms to a first authorization position relationship, where the first authorization position relationship includes that the current flight path point is located within the authorized zone and a first distance is greater than or equal to a first boundary distance threshold, where the first distance is a distance between the current flight path point and a boundary of the authorized zone.

In this technical solution, a flight path point of the unmanned aerial vehicle is planned by verifying the relative position relationship between the current flight path point of the unmanned aerial vehicle and the authorized zone with the highest permission and determining the current flight path point as the flyable path point in the case that the current flight path point conforms to the first authorization position relationship. Because the first authorization position relationship includes that the current flight path point is located within the authorized zone, and the distance between the current flight path point and the boundary of the authorized zone is greater than the first boundary distance threshold, in a case that the current flight path point conforms to the first authorization position relationship, it indicates that the current flight path point is located within a flight-authorized zone and is away from a boundary of the flight-authorized zone, that is, the current flight path point is located within a safe zone, and determining the current flight path point as the flyable path point helps ensure flight safety of the unmanned aerial vehicle.

With reference to the first aspect, in a possible implementation, the method further includes: verifying a relative position relationship between the current flight path point and the no-fly zone in a case that the current flight path point conforms to a second authorization position relationship, where the second authorization position relationship includes that the current flight path point is located outside the authorized zone; or the current flight path point is located within the authorized zone and the first distance is less than the first boundary distance threshold; verifying a relative position relationship between the current flight path point and a geofencing zone in a case that the current flight path point conforms to a first no-fly position relationship, where permission of the geofencing zone is lower than the permission of the no-fly zone; and the first no-fly position relationship includes that the current flight path point is located outside the no-fly zone and a second distance is greater than or equal to a second boundary distance threshold, where the second distance is a distance between the current flight path point and a boundary of the no-fly zone; and determining the current flight path point as the flyable path point in a case that the current flight path point conforms to a first fence position relationship, where the first fence position relationship includes that the current flight path point is located within the geofencing zone and a third distance is greater than or equal to a third boundary distance threshold, where the third distance is a distance between the current flight path point and a boundary of the geofencing zone.

In a case that the current flight path point conforms to the second authorization position relationship, it indicates that the current flight path point is located outside the flight-authorized zone or is located within the flight-authorized zone and close to the boundary of the flight-authorized zone, and the relative position relationship between the current flight path point and the no-fly zone is further verified. In a case that the current flight path point conforms to the first no-fly position relationship, it indicates that the current flight path point is located outside the no-fly zone and is away from the no-fly zone, and the relative position relationship between the current flight path point and the geofencing zone is then further verified. In a case that the current flight path point conforms to the first fence position relationship, it indicates that the current flight path point is within the geofencing zone and is away from the boundary of the geofencing zone, that is, the current flight path point is located within the safe zone, and the determining the current flight path point as the flyable path point helps ensure the flight safety of the unmanned aerial vehicle. Multi-level relative position relationship verification facilitates conflict resolution and improvement of flight compliance of the unmanned aerial vehicle in a complex airspace environment. The hierarchical verification further facilitates reduction of a verification computational load and improvement of a verification speed.

With reference to the first aspect, in a possible implementation, the method further includes: determining the current flight path point as a no-fly path point in a case that the current flight path point conforms to a second no-fly position relationship or a second fence position relationship, where the second no-fly position relationship includes that the current flight path point is located within the no-fly zone; or the current flight path point is located outside the no-fly zone and the second distance is less than the second boundary distance threshold; and the second fence position relationship includes that the current flight path point is located outside the geofencing zone; or the current flight path point is located within the geofencing zone and the third distance is less than the third boundary distance threshold.

In a case that the current flight path point conforms to the second no-fly position relationship, it indicates that the current flight path point is located within the no-fly zone or is located outside the no-fly zone and close to the boundary of the no-fly zone. In a case that the current flight path point conforms to the second fence position relationship, it indicates that the current flight path point is located outside the geofencing zone or is located within the geofencing zone and close to the boundary of the geofencing zone. In a case that the current flight path point conforms to the second no-fly position relationship or the second fence position relationship, determining the current flight path point as a no-fly point facilitates improvement of flight safety of the unmanned aerial vehicle in the complex airspace environment.

With reference to the first aspect, in a possible implementation, the method further includes: in a case that the current flight path point conforms to the second fence position relationship: outputting a first alarm prompt if the current flight path point is located within the authorized zone and the first distance is less than the first boundary distance threshold, where the first alarm prompt is used for representing that the current flight path point is close to the boundary of the authorized zone; or when the condition in which the current flight path point is located within the authorized zone and the first distance is less than the first boundary distance threshold is not met, outputting a second alarm prompt if the current flight path point is located within the geofencing zone and the third distance is less than the third boundary distance threshold, where the second alarm prompt is used for representing that the current flight path point is close to the boundary of the geofencing zone; or controlling the unmanned aerial vehicle to return if the current flight path point is located outside the geofencing zone.

When the current flight path point is located within the authorized zone and is close to the boundary of the authorized zone, or when the current flight path point is located within the geofencing zone and is close to the boundary of the geofencing zone, a corresponding alarm prompt is outputted, to facilitate a user in adjusting a flight path of the unmanned aerial vehicle in time. When the current flight path point is located outside the geofencing zone, controlling the unmanned aerial vehicle to return helps ensure flight safety of the unmanned aerial vehicle.

With reference to the first aspect, in a possible implementation, the method further includes: in a case that the current flight path point conforms to the second no-fly position relationship: outputting a first alarm prompt if the current flight path point is located within the authorized zone and the first distance is less than the first boundary distance threshold, where the first alarm prompt is used for representing that the current flight path point is close to the boundary of the authorized zone; or when the condition in which the current flight path point is located within the authorized zone and the first distance is less than the first boundary distance threshold is not met, outputting a third alarm prompt if the current flight path point is located outside the no-fly zone and the second distance is less than the second boundary distance threshold, where the third alarm prompt is used for representing that the current flight path point is close to the boundary of the no-fly zone; or prohibiting the unmanned aerial vehicle from flying if the current flight path point is located within the no-fly zone.

When the current flight path point is located within the authorized zone and is close to the boundary of the authorized zone, or when the current flight path point is located within the no-fly zone and is close to the boundary of the no-fly zone, a corresponding alarm prompt is outputted, to facilitate a user in adjusting a flight path of the unmanned aerial vehicle in time. When the current flight path point is located within the no-fly zone, prohibiting the unmanned aerial vehicle from flying helps ensure flight compliance of the unmanned aerial vehicle.

With reference to the first aspect, in a possible implementation, the geofencing zone includes a circular fence zone and a polygonal fence zone; and the verifying a relative position relationship between the current flight path point and a geofencing zone includes: verifying a relative position relationship between the current flight path point and the circular fence zone; verifying a relative position relationship between the current flight path point and the polygonal fence zone in a case that the current flight path point meets a first circular fence condition or a second circular fence condition, where the first circular fence condition includes that the current flight path point is located outside the circular fence zone; and the second circular fence condition includes that the current flight path point is located within the circular fence zone and a distance between the current flight path point and a boundary of the circular fence zone is less than the third boundary distance threshold; determining, in a case that the current flight path point meets a first polygonal fence condition, that the current flight path point is located within the geofencing zone and the third distance is greater than or equal to the third boundary distance threshold, where the first polygonal fence condition includes that the current flight path point is located within the polygonal fence zone and a first shortest distance is greater than or equal to the third boundary distance threshold, where the first shortest distance is a shortest distance between the current flight path point and a boundary of the polygonal fence zone; and determining, in a case that the current flight path point meets a third circular fence condition, that the current flight path point is located within the geofencing zone and the third distance is greater than or equal to the third boundary distance threshold, where the third circular fence condition includes that the current flight path point is located within the circular fence zone and the distance between the current flight path point and the boundary of the circular fence zone is greater than or equal to the third boundary distance threshold.

The relative position relationship between the current flight path point and the circular fence zone is first verified, and then the relative position relationship between the current flight path point and the polygonal fence zone is verified. This helps reduce a verification computational load and improve a verification speed.

With reference to the first aspect, in a possible implementation, the verifying a relative position relationship between the current flight path point and a geofencing zone further includes: determining, in a case that the current flight path point meets a second polygonal fence condition, that the current flight path point is located within the geofencing zone and the third distance is less than the third boundary distance threshold, where the second polygonal fence condition includes that the current flight path point is located within the polygonal fence zone and the first shortest distance is less than the third boundary distance threshold; and determining, in a case that the current flight path point meets a third polygonal fence condition, that the current flight path point is located outside the geofencing zone, where the third polygonal fence condition includes that the current flight path point is located outside the polygonal fence zone.

With reference to the first aspect, in a possible implementation, the verifying a relative position relationship between the current flight path point and the circular fence zone includes: calculating a distance between the current flight path point and a center of the circular fence zone, to obtain a fourth distance; determining, in a case that the fourth distance is greater than a first radius, that the current flight path point meets the first circular fence condition, where the first radius is a radius of the circular fence zone; determining, in a case that the fourth distance is greater than a first difference and is less than or equal to the first radius, that the current flight path point meets the second circular fence condition, where the first difference is a difference between the first radius and the third boundary distance threshold; and determining, in a case that the fourth distance is less than or equal to the first difference, that the current flight path point meets the third circular fence condition.

The distance between the current flight path point and the center of the circular fence zone is calculated, and corresponding determining is performed. This helps quickly verify the relative position relationship between the current flight path point and the circular fence zone.

With reference to the first aspect, in a possible implementation, the no-fly zone includes a circular no-fly zone and a polygonal no-fly zone; and the verifying a relative position relationship between the current flight path point and a geofencing zone includes: verifying a relative position relationship between the current flight path point and the circular no-fly zone; verifying a relative position relationship between the current flight path point and the polygonal no-fly zone in a case that the current flight path point meets a first circular no-fly condition, where the first circular no-fly condition includes that the current flight path point is located outside the circular no-fly zone and a distance between the current flight path point and a boundary of the circular no-fly zone is greater than the second boundary distance threshold; and determining, in a case that the current flight path point conforms to a first polygonal no-fly condition, that the current flight path point is located outside the no-fly zone and the second distance is greater than or equal to the second boundary distance threshold, where the first polygonal no-fly condition includes that the current flight path point is located outside the polygonal no-fly zone and a second shortest distance is greater than or equal to the second boundary distance threshold, where the second shortest distance is a shortest distance between the current flight path point and a boundary of the polygonal no-fly zone.

The relative position relationship between the current flight path point and the circular no-fly zone is first verified, and then the relative position relationship between the current flight path point and the polygonal no-fly zone is verified. This helps reduce a verification computational load and improve a verification speed.

With reference to the first aspect, in a possible implementation, the verifying a relative position relationship between the current flight path point and a geofencing zone further includes: determining, in a case that the current flight path point meets a second circular no-fly condition or a second polygonal no-fly condition, that the current flight path point is located within the no-fly zone, where the second circular no-fly condition includes that the current flight path point is located within the circular no-fly zone; and the second polygonal no-fly condition includes that the current flight path point is located within the polygonal no-fly zone; and determining, in a case that the current flight path point meets a third circular no-fly condition or a third polygonal no-fly condition, that the current flight path point is located outside the no-fly zone and the second distance is less than the second boundary distance threshold, where the third circular no-fly condition includes that the current flight path point is located outside the circular no-fly zone and the distance between the current flight path point and the boundary of the circular no-fly zone is less than the second boundary distance threshold; and the third polygonal no-fly condition includes that the current flight path point is located outside the polygonal no-fly zone and the second shortest distance is less than the second boundary distance threshold.

With reference to the first aspect, in a possible implementation, the verifying a relative position relationship between the current flight path point and the circular no-fly zone includes: calculating a distance between the current flight path point and a center of the circular no-fly zone, to obtain a fifth distance; determining, in a case that the fifth distance is greater than a sum of a second radius and the second boundary distance threshold, that the current flight path point meets the first circular no-fly condition, where the second radius is a radius of the circular no-fly zone; determining, in a case that the fifth distance is less than the second radius, that the current flight path point meets a second circular no-fly condition; and determining, in a case that the fifth distance is greater than or equal to the second radius and is less than or equal to the sum of the second radius and the second boundary distance threshold, that the current flight path point meets a third circular no-fly condition.

The distance between the current flight path point and the center of the circular no-fly zone is calculated, and corresponding determining is performed. This helps quickly verify the relative position relationship between the current flight path point and the circular no-fly zone.

With reference to the first aspect, in a first possible implementation, the authorized zone includes a circular authorized zone; and the verifying a relative position relationship between a current flight path point of an unmanned aerial vehicle and an authorized zone includes: calculating a distance between the current flight path point and a center of the circular authorized zone, to obtain a sixth distance; determining, in a case that the sixth distance is less than or equal to a second difference, that the current flight path point is located within the authorized zone and the first distance is greater than or equal to the first boundary distance threshold, where the second difference is a difference between a third radius and the first boundary distance threshold, where the third radius is a radius of the circular authorized zone; determining, in a case that the sixth distance is greater than the second difference and is less than or equal to the third radius, that the current flight path point is located within the authorized zone and the first distance is less than the first boundary distance threshold; and determining, in a case that the sixth distance is greater than the third radius, that the current flight path point is located outside the authorized zone.

The distance between the current flight path point and the center of the circular authorized zone is calculated, and corresponding determining is performed. This helps quickly verify the relative position relationship between the current flight path point and the circular authorized zone.

With reference to the first aspect, in a possible implementation, the authorized zone includes a circular authorized zone and a polygonal authorized zone; and the verifying a relative position relationship between a current flight path point of an unmanned aerial vehicle and an authorized zone includes: verifying a relative position relationship between the current flight path point and the circular authorized zone; verifying a relative position relationship between the current flight path point and the polygonal authorized zone in a case that the current flight path point meets a first circular authorization condition or a second circular authorization condition, where the first circular authorization condition includes that the current flight path point is located outside the circular authorized zone; and the second circular authorization condition includes that the current flight path point is located within the circular authorized zone and a distance between the current flight path point and a boundary of the circular authorized zone is less than the first boundary distance threshold; determining, in a case that the current flight path point meets a first polygonal authorization condition, that the current flight path point is located within the authorized zone and the first distance is greater than or equal to the first boundary distance threshold, where the first polygonal authorization condition includes that the current flight path point is located within the polygonal authorized zone and a third shortest distance is greater than or equal to the first boundary distance threshold, where the third shortest distance is a shortest distance between the current flight path point and a boundary of the polygonal authorized zone; and determining, in a case that the current flight path point meets a third circular authorization condition, that the current flight path point is located within the authorized zone and the first distance is greater than or equal to the first boundary distance threshold, where the third circular authorization condition includes that the current flight path point is located within the circular authorized zone and the distance between the current flight path point and the boundary of the circular authorized zone is greater than or equal to the first boundary distance threshold.

The relative position relationship between the current flight path point and the circular authorized zone is first verified, and then the relative position relationship between the current flight path point and the polygonal authorized zone is verified. This helps reduce a verification computational load and improve a verification speed.

With reference to the first aspect, in a possible implementation, the method further includes: determining, in a case that the current flight path point meets a second polygonal authorization condition, that the current flight path point is located within the authorized zone and the first distance is less than the first boundary distance threshold, where the second polygonal authorization condition includes that the current flight path point is located within the polygonal authorized zone and the third shortest distance is less than the first boundary distance threshold; and determining, in a case that the current flight path point meets a third polygonal authorization condition, that the current flight path point is located outside the authorized zone, where the third polygonal authorization condition includes that the current flight path point is located outside the polygonal authorized zone.

According to a second aspect, an apparatus for planning a flight path of an unmanned aerial vehicle is provided, including:
a position verification module, configured to verify a relative position relationship between a current flight path point of the unmanned aerial vehicle and an authorized zone, where permission of the authorized zone is higher than permission of a no-fly zone; and
a path point determining module, configured to determine the current flight path point as a flyable path point in a case that the current flight path point conforms to a first authorization position relationship, where the first authorization position relationship includes that the current flight path point is located within the authorized zone and a first distance is greater than or equal to a first boundary distance threshold, where the first distance is a distance between the current flight path point and a boundary of the authorized zone.

According to a third aspect, a computer device is provided, including a memory and a processor, where the memory is connected to the processor, the processor is configured to execute one or more computer programs stored in the memory, and when the processor executes the one or more computer programs, the computer device is caused to perform the method for planning a flight path of an unmanned aerial vehicle according to the foregoing first aspect.

According to a fourth aspect, a computer-readable storage medium is provided, storing a computer program, where the computer program includes program instructions, and the program instructions, when executed by a processor, causes the processor to perform the method for planning a flight path of an unmanned aerial vehicle according to the foregoing first aspect.

This application can achieve the following technical effects: Flight path point planning of the unmanned aerial vehicle is implemented. Because the first authorization position relationship includes that the current flight path point is located within the authorized zone, and the distance between the current flight path point and the boundary of the authorized zone is greater than the first boundary distance threshold, in a case that the current flight path point conforms to the first authorization position relationship, it indicates that the current flight path point is located within a flight-authorized zone and is away from a boundary of the flight-authorized zone, that is, the current flight path point is located within a safe zone, and determining the current flight path point as the flyable path point helps ensure flight safety of the unmanned aerial vehicle.

### BRIEF DESCRIPTION OF THE DRAWINGS

To describe technical solutions in embodiments of this application more clearly, the following briefly describes accompanying drawings required for describing the embodiments of this application. Apparently, the accompanying drawings in the following description show merely some embodiments of this application, and a person of ordinary skill in the art may derive other drawings from the accompanying drawings without creative efforts.
FIG. 1 is a schematic flowchart of a method for planning a flight path of an unmanned aerial vehicle according to an embodiment of this application;
FIG. 2 and FIG. 3 are schematic flowcharts of verifying a relative position relationship between a current flight path point of an unmanned aerial vehicle and an authorized zone according to an embodiment of this application;
FIG. 4 is a schematic flowchart of verifying a relative position relationship between a current flight path point of an unmanned aerial vehicle and a no-fly zone according to an embodiment of this application;
FIG. 5 is a schematic flowchart of verifying a relative position relationship between a current flight path point of an unmanned aerial vehicle and a geofencing zone according to an embodiment of this application;
FIG. 6 is a schematic structural diagram of an apparatus for planning a flight path of an unmanned aerial vehicle according to an embodiment of this application; and
FIG. 7 is a schematic structural diagram of a computer device according to an embodiment of this application.

### DETAILED DESCRIPTION

To make objectives, technical solutions, and advantages of this application clearer and more understandable, this application is further described in detail below with reference to accompanying drawings and embodiments. It should be understood that the specific embodiments described herein are only used to describe this application, instead of limiting this application. All other embodiments obtained by a person of ordinary skill in the art based on the embodiments of this application without creative efforts shall fall within the protection scope of this application.

It should be noted that, if no conflict occurs, features in the embodiments of this application may be combined with each other and fall within the protection scope of this application. In addition, although functional module division is performed in the schematic diagram of the apparatus, and a logical sequence is shown in the flowchart, in some cases, the shown or described steps may be performed by using module division different from the module division in the apparatus, or in a sequence different from the sequence in the flowchart. Further, terms such as "first", "second", and "third" used in this application do not limit data or an execution order, but are only used to distinguish same objects or similar objects whose functions and purposes are basically the same.

The technical solutions of this application are suitable for an unmanned aerial vehicle flight scenario. In the unmanned aerial vehicle flight scenario, a path is planned for an unmanned aerial vehicle generally based on a geofencing rule, so that the unmanned aerial vehicle flies within a geofence. In a complex airspace environment, there is overlapping of a plurality of zones of different types, and a flight permission conflict problem in the complex airspace environment is difficult to resolve by planning the path for the unmanned aerial vehicle based on the geofencing rule. In this application, the path for the unmanned aerial vehicle is planned in combination with zone priority determining and a safe distance constraint, to resolve the flight permission conflict problem in the complex airspace environment.

For ease of understanding, some concepts used in this application are first described.

### 1. Authorized zone

The authorized zone is a zone in which an unmanned aerial vehicle is permitted to perform a flight activity under a specific condition as approved or authorized by a relevant department, that is, a flight-authorized zone. Permission of the authorized zone is higher than permission of a subsequently described no-fly zone. In other words, in a zone in which an authorized zone and a no-fly zone overlap, a flight demand in the authorized zone is prioritized. Generally, the authorized zone is a circular authorized zone. The circular authorized zone is an authorized zone whose projection onto a horizontal plane is circular or approximately circular. Optionally, the authorized zone may alternatively be a polygonal authorized zone. The polygonal authorized zone is an authorized zone whose projection onto a horizontal plane is polygonal or approximately polygonal.

### 2. No-fly zone

The no-fly zone is a zone in which according to national laws and regulations, a safety requirement, or a special situation, an unmanned aerial vehicle is explicitly prohibited to fly. Permission of the no-fly zone is higher than permission of a subsequently described geofencing zone. In other words, in a zone in which a no-fly zone and a geofencing zone overlap, an unmanned aerial vehicle is prohibited to fly. The no-fly zone may be classified into a circular no-fly zone and a polygonal no-fly zone. The circular no-fly zone is a no-fly zone whose projection onto a horizontal plane is circular or approximately circular. The polygonal no-fly zone is a no-fly zone whose projection onto a horizontal plane is polygonal or approximately polygonal.

### 3. Geofencing zone

The geofencing zone is a zone that is set by using an electronic technology to restrict a flight range of an unmanned aerial vehicle. The geofencing zone is used for forcing the unmanned aerial vehicle to operate within a fence zone. The geofencing zone may be classified into a circular fence zone and a polygonal fence zone. The circular fence zone is a geofencing zone whose projection onto a horizontal plane is circular or approximately circular. The polygonal fence zone is a geofencing zone whose projection onto a horizontal plane is polygonal or approximately polygonal.

Subsequently, the technical solutions of this application are described.

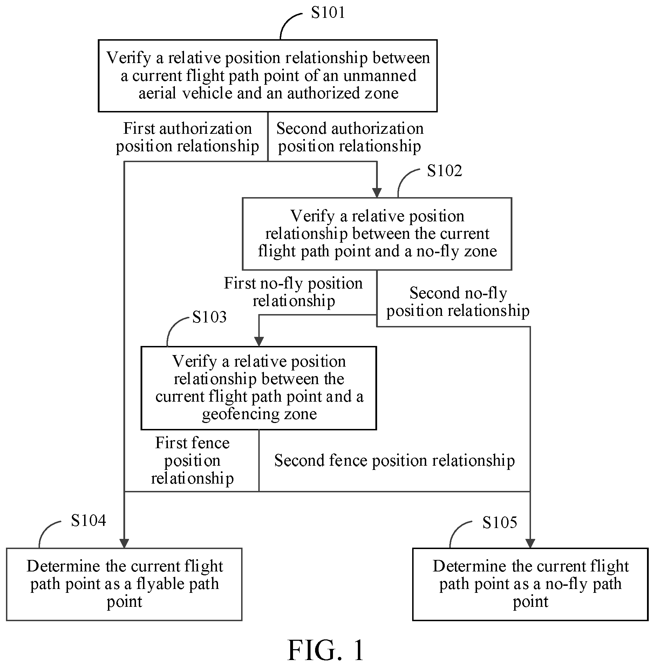

FIG. 1 is a schematic flowchart of a method for planning a flight path of an unmanned aerial vehicle according to an embodiment of this application. As shown in FIG. 1, the method includes the following steps.

S101: Verify a relative position relationship between a current flight path point of the unmanned aerial vehicle and an authorized zone.

The current flight path point of the unmanned aerial vehicle may be a path point to which the unmanned aerial vehicle is to fly during flight, or may be a path point set by a user during flight route planning for the unmanned aerial vehicle. For definition of the authorized zone, refer to the foregoing concept description.

In this application, the relative position relationship between the current flight path point and the authorized zone includes the following three cases. 1. The current flight path point is located outside the authorized zone. 2. The current flight path point is located within the authorized zone and a first distance is less than a first boundary distance threshold. 3. The current flight path point is located within the authorized zone and a first distance is greater than or equal to a first boundary distance threshold. The first distance is a distance between the current flight path point and a boundary of the authorized zone, and the first boundary distance threshold is a threshold for determining whether the current flight path point is close to the boundary of the authorized zone. That the current flight path point is located within the authorized zone and the first distance is less than the first boundary distance threshold indicates that the current flight path point is close to the boundary of the authorized zone, and there is a flight safety hazard. That the current flight path point is located within the authorized zone and the first distance is greater than or equal to the first boundary distance threshold indicates that the current flight path point is away from the boundary of the authorized zone, and the current flight path point is located within a safe flight zone.

For a specific implementation of verifying the relative position relationship between the current flight path point and the authorized zone that is described below, refer to the following description.

That the current flight path point is located within the authorized zone and the first distance is greater than or equal to the first boundary distance threshold belongs to a first authorization position relationship defined in this application. In a case that the current flight path point conforms to the first authorization position relationship, it indicates that the current flight path point is located within the safe flight zone, and step S104 is performed. That the current flight path point is located outside the authorized zone, or that the current flight path point is located within the authorized zone and the first distance is less than the first boundary distance threshold belongs to a second authorization position relationship defined in this application. In a case that the current flight path point conforms to the second authorization position relationship, step S102 is performed.

S102: Verify a relative position relationship between the current flight path point and a no-fly zone.

For definition of the no-fly zone, refer to the foregoing concept description.

In this application, the relative position relationship between the current flight path point and the no-fly zone includes the following three cases. 1. The current flight path point is located within the no-fly zone. 2. The current flight path point is located outside the no-fly zone and a second distance is less than a second boundary distance threshold. 3. The current flight path point is located outside the no-fly zone and a second distance is greater than or equal to a second boundary distance threshold. The second distance is a distance between the current flight path point and a boundary of the no-fly zone, and the second boundary distance threshold is a threshold for determining whether the current flight path point is close to the boundary of the no-fly zone. That the current flight path point is located outside the no-fly zone and the second distance is less than the second boundary distance threshold indicates that the current flight path point is close to the boundary of the no-fly zone, and there is a possibility of flight non-compliance. That the current flight path point is located outside the no-fly zone and the second distance is greater than or equal to the second boundary distance threshold indicates that the current flight path point is away from the boundary of the no-fly zone.

For a specific implementation of verifying the relative position relationship between the current flight path point and the no-fly zone that is described below, refer to the following description.

That the current flight path point is located outside the authorized zone and the second distance is greater than or equal to the second boundary distance threshold belongs to a first no-fly position relationship defined in this application. In a case that the current flight path point conforms to the first no-fly position relationship, it indicates that the current flight path point is away from the boundary of the no-fly zone, and step S103 is performed. That the current flight path point is located within the no-fly zone, or that the current flight path point is located outside the no-fly zone and the second distance is less than the second boundary distance threshold belongs to a second no-fly position relationship defined in this application. In a case that the current flight path point conforms to the second no-fly position relationship, step S105 is performed.

In some embodiments, in a case that the current flight path point conforms to the second no-fly position relationship, a first alarm prompt is outputted if the current flight path point is located within the authorized zone and the first distance is less than the first boundary distance threshold, where the first alarm prompt is used for representing that the current flight path point is close to the boundary of the authorized zone; otherwise (when the current flight path point does not meet the condition in which the current flight path point is located within the authorized zone and the first distance is less than the first boundary distance threshold), a third alarm prompt is outputted if the current flight path point is located outside the no-fly zone and the second distance is less than the second boundary distance threshold, where the third alarm prompt is used for representing that the current flight path point is close to the boundary of the no-fly zone; or the unmanned aerial vehicle is prohibited from flying if the current flight path point is located within the no-fly zone.

When the current flight path point is located within the authorized zone and is close to the boundary of the authorized zone, or when the current flight path point is located within the no-fly zone and is close to the boundary of the no-fly zone, a corresponding alarm prompt is outputted, to facilitate a user in adjusting a flight path of the unmanned aerial vehicle in time. When the current flight path point is located within the no-fly zone, prohibiting the unmanned aerial vehicle from flying helps ensure flight compliance of the unmanned aerial vehicle.

S103: Verify a relative position relationship between the current flight path point and a geofencing zone.

For definition of the geofencing zone, refer to the foregoing concept description.

In this application, the relative position relationship between the current flight path point and the geofencing zone includes the following three cases. 1. The current flight path point is located outside the geofencing zone. 2. The current flight path point is located within the geofencing zone and a third distance is less than a third boundary distance threshold. 3. The current flight path point is located within the geofencing zone and a third distance is greater than or equal to a third boundary distance threshold. The third distance is a distance between the current flight path point and a boundary of the geofencing zone, and the third boundary distance threshold is a threshold for determining whether the current flight path point is close to the boundary of the geofencing zone. That the current flight path point is located within the geofencing zone and the third distance is less than the third boundary distance threshold indicates that the current flight path point is close to the boundary of the geofencing zone, and there is a flight safety hazard. That the current flight path point is located within the geofencing zone and the third distance is greater than or equal to the third boundary distance threshold indicates that the current flight path point is away from the boundary of the geofencing zone, and the current flight path point is located within a safe flight zone.

For a specific implementation of verifying the relative position relationship between the current flight path point and the geofencing zone that is described below, refer to the following description.

That the current flight path point is located within the geofencing zone and the third distance is greater than or equal to the third boundary distance threshold belongs to a first fence position relationship defined in this application. In a case that the current flight path point conforms to the first fence position relationship, it indicates that the current flight path point is located within the safe flight zone, and step S104 is performed. That the current flight path point is located outside the geofencing zone, or that the current flight path point is located within the geofencing zone and the third distance is less than the third boundary distance threshold belongs to a second fence position relationship defined in this application. In a case that the current flight path point conforms to the second fence position relationship, step S105 is performed.

In some embodiments, in a case that the current flight path point conforms to the second fence position relationship, a first alarm prompt is outputted if the current flight path point is located within the authorized zone and the first distance is less than the first boundary distance threshold, where the first alarm prompt is used for representing that the current flight path point is close to the boundary of the authorized zone; otherwise (when the current flight path point does not meet the condition in which the current flight path point is located within the authorized zone and the first distance is less than the first boundary distance threshold), a second alarm prompt is outputted if the current flight path point is located outside within the geofencing zone and the third distance is less than the third boundary distance threshold, where the second alarm prompt is used for representing that the current flight path point is close to the boundary of the geofencing zone; or the unmanned aerial vehicle is controlled to return if the current flight path point is located outside the geofencing zone.

When the current flight path point is located within the authorized zone and is close to the boundary of the authorized zone, or when the current flight path point is located within the geofencing zone and is close to the boundary of the geofencing zone, a corresponding alarm prompt is outputted, to facilitate a user in adjusting a flight path of the unmanned aerial vehicle in time. When the current flight path point is located outside the geofencing zone, controlling the unmanned aerial vehicle to return helps ensure flight safety of the unmanned aerial vehicle.

S104: Determine the current flight path point as a flyable path point.

S105: Determine the current flight path point as a no-fly path point.

In the foregoing technical solution corresponding to FIG. 1, the relative position relationship between the current flight path point of the unmanned aerial vehicle and the authorized zone with the highest permission is verified. In this way, in a case that the current flight path point conforms to the first authorization position relationship, it indicates that the current flight path point is located within a flight-authorized zone and is away from a boundary of the flight-authorized zone, that is, the current flight path point is located within a safe zone, and determining the current flight path point as the flyable path point helps ensure flight safety of the unmanned aerial vehicle. In a case that the current flight path point conforms to the second authorization position relationship, it indicates that the current flight path point is located outside the flight-authorized zone or is located within the flight-authorized zone and close to the boundary of the flight-authorized zone, and the relative position relationship between the current flight path point and the no-fly zone is further verified. In a case that the current flight path point conforms to the first no-fly position relationship, it indicates that the current flight path point is located outside the no-fly zone and is away from the no-fly zone, and the relative position relationship between the current flight path point and the geofencing zone is then further verified. In a case that the current flight path point conforms to the first fence position relationship, it indicates that the current flight path point is within the geofencing zone and is away from the boundary of the geofencing zone, that is, the current flight path point is located within the safe zone, and the determining the current flight path point as the flyable path point helps ensure the flight safety of the unmanned aerial vehicle. Multi-level relative position relationship verification facilitates conflict resolution and improvement of flight compliance of the unmanned aerial vehicle in a complex airspace environment. The hierarchical verification further facilitates reduction of a verification computational load and improvement of a verification speed. In a case that the current flight path point conforms to the second no-fly position relationship, it indicates that the current flight path point is located within the no-fly zone or is located outside the no-fly zone and close to the boundary of the no-fly zone. In a case that the current flight path point conforms to the second fence position relationship, it indicates that the current flight path point is located outside the geofencing zone or is located within the geofencing zone and close to the boundary of the geofencing zone. In a case that the current flight path point conforms to the second no-fly position relationship or the second fence position relationship, determining the current flight path point as a no-fly point facilitates improvement of flight safety of the unmanned aerial vehicle in the complex airspace environment. In conclusion, the technical solution corresponding to FIG. 1 can ensure flight safety and compliance of the unmanned aerial vehicle in the complex airspace environment.

Specific implementations of verifying the relative position relationships between the current flight path point and the authorized zone, the no-fly zone, and the geofencing zone are described below.

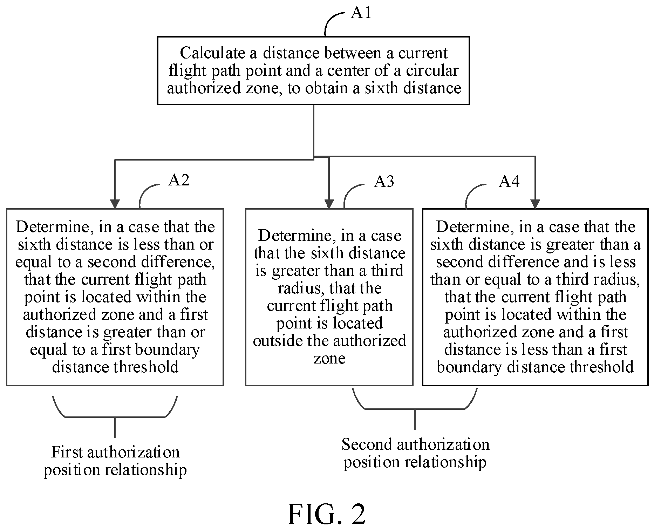

In some embodiments, the authorized zone includes a circular authorized zone. In a procedure shown in FIG. 2, the verifying a relative position relationship between a current flight path point of an unmanned aerial vehicle and an authorized zone includes the following steps A1 to A4.

A1: Calculate a distance between the current flight path point and a center of the circular authorized zone, to obtain a sixth distance.

The sixth distance may be obtained by calculating the distance between the current flight path point and the center of the circular authorized zone through the following formula: ${D}_{authorize} = \sqrt[2]{{\left({x}_{p}-{x}_{au}\right)}^{2} + {\left({y}_{p}-{y}_{au}\right)}^{2}}$ (xₚ, yₚ) represents position coordinates of the current flight path point, (xₐᵤ, yₐᵤ) represents position coordinates of the center of the circular authorized zone, and D_{authorize} represents the sixth distance.

A2: Determine, in a case that the sixth distance is less than or equal to a second difference, that the current flight path point is located within the authorized zone and the first distance is greater than or equal to the first boundary distance threshold.

The second difference is a difference between a third radius and the first boundary distance threshold, where the third radius is a radius of the circular authorized zone. The second difference is denoted as Δd1. Δd1=R_{authorize}-d1. R_{authorize} represents the radius of the circular authorized zone, and d1 represents the first boundary distance threshold.

That is, D_{authorize}≤R_{authorize}-d1, and this indicates that the current flight path point is located within the authorized zone and the first distance is greater than or equal to the first boundary distance threshold.

A3: Determine, in a case that the sixth distance is greater than the second difference and is less than or equal to the third radius, that the current flight path point is located within the authorized zone and the first distance is less than the first boundary distance threshold.

That is, R_{authorize}-d1<D_{authorize}≤R_{authorize}, and this indicates that the current flight path point is located within the authorized zone and the first distance is less than the first boundary distance threshold.

A4: Determine, in a case that the sixth distance is greater than the third radius, that the current flight path point is located outside the authorized zone.

That is, D_{authorize}>R_{authorize}, and this indicates that the current flight path point is located outside the authorized zone.

It can be seen that the current flight path point conforms to the first authorization position relationship in a case that the sixth distance is less than or equal to the second difference; and the current flight path point conforms to the second authorization position relationship in a case that the sixth distance is greater than the second difference (including that the sixth distance is greater than the second difference and less than or equal to the third radius, or the sixth distance is greater than the third radius).

In steps A1 to A4, the distance between the current flight path point and the center of the circular authorized zone is calculated, and corresponding determining is performed. This helps quickly verify the relative position relationship between the current flight path point and the circular authorized zone.

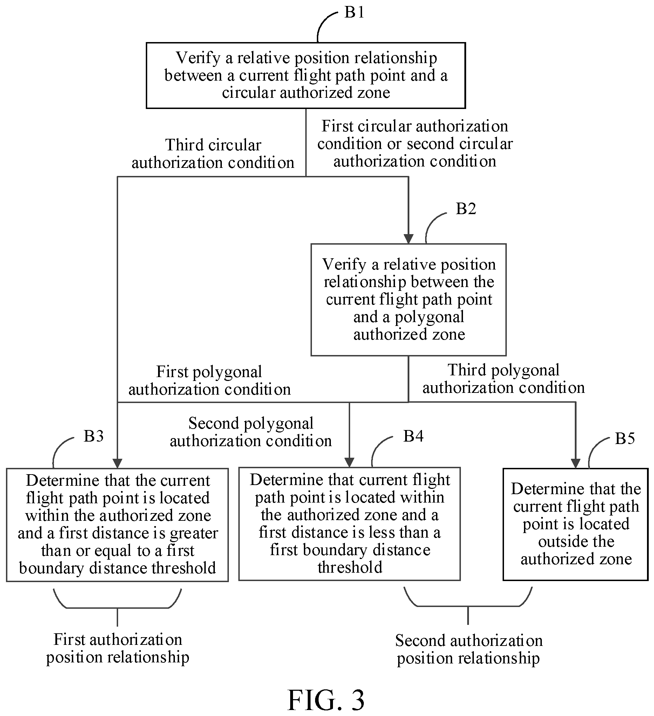

In some other embodiments, the authorized zone includes a circular authorized zone and a polygonal authorized zone. In a procedure shown in FIG. 3, the verifying a relative position relationship between a current flight path point and an authorized zone includes the following steps B1 to B5.

B1: Verify a relative position relationship between the current flight path point and the circular authorized zone.

The relative position relationship between the current flight path point and the circular authorized zone includes the following three cases. 1. The current flight path point is located outside the circular authorized zone. 2. The current flight path point is located within the circular authorized zone and a distance between the current flight path point and a boundary of the circular authorized zone is less than the first boundary distance threshold. 3. The current flight path point is located within the circular authorized zone and the distance between the current flight path point and the boundary of the circular authorized zone is greater than or equal to the first boundary distance threshold.

That the current flight path point is located outside the circular authorized zone is referred to as a first circular authorization condition. That the current flight path point is located within the circular authorized zone and the distance between the current flight path point and the boundary of the circular authorized zone is less than the first boundary distance threshold is referred to as a second circular authorization condition. That the current flight path point is located within the circular authorized zone and the distance between the current flight path point and the boundary of the circular authorized zone is greater than or equal to the first boundary distance threshold is referred to as a third circular authorization condition.

Specifically, referring to A1, the sixth distance is calculated. In a case that the sixth distance is greater than the third radius, that is, D_{authorize}>R_{authorize}, it is determined that the current flight path point meets the first circular authorization condition; in a case that the sixth distance is greater than the second difference and is less than or equal to the third radius, that is, R_{authorize}-d1<D_{authorize}≤R_{authorize}, it is determined that the current flight path point meets the second circular authorization condition; or in a case that the sixth distance is less than the second difference, that is, D_{authorize}≤R_{authorize}-d1, it is determined that the current flight path point meets the third circular authorization condition.

In a case that the current flight path point meets the first circular authorization condition or the second circular authorization condition, step B2 is performed. In a case that the current flight path point meets the third circular authorization condition, step B3 is performed.

B2: Verify a relative position relationship between the current flight path point and the polygonal authorized zone.

The relative position relationship between the current flight path point and the polygonal authorized zone includes the following three cases. 1. The current flight path point is located within the polygonal authorized zone and a third shortest distance is greater than or equal to the first boundary distance threshold. 2. The current flight path point is located within the polygonal authorized zone and the third shortest distance is less than the first boundary distance threshold. 3. The current flight path point is located outside the polygonal authorized zone.

That the current flight path point is located within the polygonal authorized zone and the third shortest distance is greater than or equal to the first boundary distance threshold is referred to as a first polygonal authorization condition. That the current flight path point is located within the polygonal authorized zone and the third shortest distance is less than the first boundary distance threshold is referred to as a second polygonal authorization condition. That the current flight path point is located outside the polygonal authorized zone is referred to as a third polygonal authorization condition.

The third shortest distance is a shortest distance between the current flight path point and the boundary of the polygonal authorized zone, and the third shortest distance is denoted as d_authorize_min.

Specifically, whether the current flight path point is located within the polygonal authorized zone is determined; and if the current flight path point is located within the polygonal authorized zone, the third shortest distance is obtained by calculating a shortest distance between the current flight path point and the boundary of the polygonal authorized zone, whether the third shortest distance is greater than or equal to the first boundary distance threshold is determined, and if the third shortest distance is greater than or equal to the first boundary distance threshold, that is, d_authorize_min≥d1, it represents that the current flight path point meets the first polygonal authorization condition; or if the third shortest distance is less than the first boundary distance threshold, that is, d_authorize_min<d1, it represents that the current flight path point meets the second polygonal authorization condition; or if the current flight path point is located outside the polygonal authorized zone, it represents that the current flight path point meets the third polygonal authorization condition.

A feasible manner for determining whether the current flight path point is located within a polygonal zone is as follows.

First, a counter is initialized: count=0.

Then, a boundary (Vᵢ, Vᵢ₊₁) of the polygonal zone (referring to the polygonal authorized zone, a polygonal no-fly zone, or a polygonal fence zone) is traversed. Vᵢ and Vᵢ₊₁ represent vertexes of the boundary of the polygonal zone. Vᵢ=(xᵢ, yᵢ). Vᵢ₊₁=(xᵢ₊₁, yᵢ₊₁). (xᵢ, yᵢ) and (xᵢ₊₁, yᵢ₊₁) represent position coordinates of the vertexes.

Next, whether a ray of the current flight path point intersects with the boundary of the polygonal zone is determined.

If min (yᵢ, yᵢ₊₁)<yₚ<max(yᵢ, yᵢ₊₁), and xᵢ+[(yₚ-yᵢ)* (xᵢ₊₁-xᵢ)]/(yᵢ₊₁-yᵢ)>xₚ, it represents that the ray of the current flight path point intersects with the boundary of the polygonal zone, a count value of the counter is incremented by one.

Further, the boundary of the polygonal zone is traversed, and whether the ray of the current flight path point intersects with the boundary of the polygonal zone is determined, until all boundaries of the polygonal zone are traversed.

After all the boundaries of the polygonal zone are traversed, if a final count value of the counter is an odd number, it is determined that the current flight path point is located within the polygonal zone; or if the final count value of the counter is an even number, it is determined that the current flight path point is located outside the polygonal zone.

A feasible manner for calculating a shortest distance between the current flight path point and the boundary of the polygonal zone is as follows.

First, the boundary (Vᵢ, Vᵢ₊₁) of the polygonal zone is traversed, and a direction vector of the boundary is calculated: d̅ = (xᵢ₊₁ - xᵢ, yᵢ₊₁ - yᵢ).

Then, a projection distance between the current flight path point and the boundary of the polygonal zone is calculated.

A projection coefficient $t = \frac{\vec{v} \vec{d}}{\vec{d} \vec{d}}$, and a vector v̅ = (xᵤ - xᵢ, yᵤ - yᵢ) between the current flight path point and the vertex Vᵢ are calculated. If 0≤t≤1, a distance between the current flight path point and a projection point on the boundary is calculated and used as the projection distance. If t<0 or t>1, a shortest distance between the current flight path point and the vertex of the boundary is calculated and used as the projection distance.

Position coordinates of the projection point on the boundary are represented as (xₜ, yₜ). xₜ=xᵢ+t*(xᵢ₊₁-xᵢ), and yₜ=yᵢ+t*(yᵢ₊₁-yᵢ).

A calculation formula of the distance between the current flight path point and the projection point is: $\sqrt[2]{{\left({x}_{p}-{x}_{t}\right)}^{2} + {\left({y}_{p}-{y}_{t}\right)}^{2}}$.

A calculation formula of the shortest distance between the current flight path point and the vertex of the boundary is: $min \left(\sqrt[2]{{\left({x}_{p}-{x}_{i}\right)}^{2} + {\left({y}_{p}-{y}_{i}\right)}^{2}}, \sqrt[2]{{\left({x}_{p}-{x}_{i + 1}\right)}^{2} + {\left({y}_{p}-{y}_{i + 1}\right)}^{2}}\right) .$

Further, the boundary of the polygonal zone is traversed, and the projection distance from the current flight path point and the boundary of the polygonal zone is calculated, until all the boundaries of the polygonal zone are traversed.

After all the boundaries of the polygonal zone are traversed, a smallest projection distance in all obtained projection distances is determined as the shortest distance between the current flight path point and the boundary of the polygonal zone. In this case, the third shortest distance herein, a subsequent first shortest distance, and a subsequent second shortest distance can be obtained.

In a case that the current flight path point meets the first polygonal authorization condition, step B3 is performed. In a case that the current flight path point meets the second polygonal authorization condition, step B4 is performed. In a case that the current flight path point meets the third polygonal authorization condition, step B5 is performed.

B3: Determine that the current flight path point is located within the authorized zone and the first distance is greater than or equal to the first boundary distance threshold.

B4: Determine that current flight path point is located within the authorized zone and the first distance is less than the first boundary distance threshold.

B5: Determine that the current flight path point is located outside the authorized zone.

It can be seen that the current flight path point meets the first authorization position relationship in a case that the current flight path point meets the third circular authorization condition or the first polygonal authorization condition, and the current flight path point meets the second authorization position relationship in a case that the current flight path point meets the first circular authorization condition or the second circular authorization condition and meets the second polygonal authorization condition or the third polygonal authorization condition.

In steps B1 to B5, the relative position relationship between the current flight path point and the circular authorized zone is first verified, and then the relative position relationship between the current flight path point and the polygonal authorized zone is verified. This helps reduce a verification computational load and improve a verification speed.

It may be understood that the relative position relationship between the current flight path point and the polygonal authorized zone may be first verified alternatively, and then the relative position relationship between the current flight path point and the circular authorized zone is verified, to verify the relative position relationship between the current flight path point and the authorized zone. This is not limited in this application.

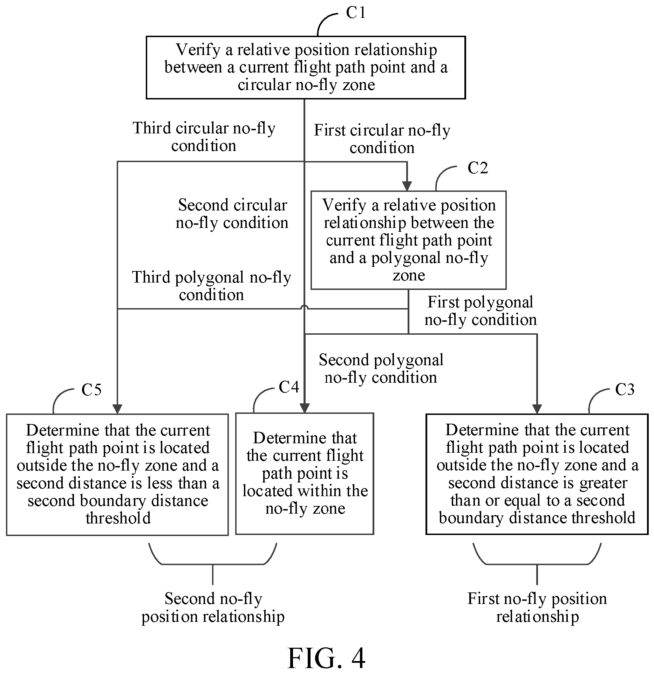

In some embodiments, the no-fly zone includes a circular no-fly zone and a polygonal no-fly zone. In a procedure shown in FIG. 4, the verifying a relative position relationship between a current flight path point and an authorized zone includes the following steps.

C1: Verify a relative position relationship between the current flight path point and the circular no-fly zone.

The relative position relationship between the current flight path point and the circular no-fly zone includes the following three cases. 1. The current flight path point is located outside the circular no-fly zone and a distance between the current flight path point and a boundary of the circular no-fly zone is greater than the second boundary distance threshold. 2. The current flight path point is located within the circular no-fly zone. 3. The current flight path point is located outside the circular no-fly zone and the distance between the current flight path point and the boundary of the circular no-fly zone is less than the second boundary distance threshold.

That the current flight path point is located outside the circular no-fly zone and the distance between the current flight path point and the boundary of the circular no-fly zone is greater than the second boundary distance threshold is referred to as a first circular no-fly condition. That the current flight path point is located within the circular no-fly zone is referred to as a second circular no-fly condition. That the current flight path point is located outside the circular no-fly zone and the distance between the current flight path point and the boundary of the circular no-fly zone is less than the second boundary distance threshold is referred to as a third circular no-fly condition.

In a feasible implementation, the relative position relationship between the current flight path point and the circular no-fly zone is verified through the following steps C11 to C14.

C11: Calculate a distance between the current flight path point and a center of the circular no-fly zone, to obtain a fifth distance.

The fifth distance may be obtained by calculating the distance between the current flight path point and the center of the circular no-fly zone through the following formula: ${D}_{no - fly} = \sqrt[2]{{\left({x}_{p}-{x}_{no}\right)}^{2} + {\left({y}_{p}-{y}_{no}\right)}^{2}}$ (xₙₒ, yₙₒ) represents position coordinates of the center of the circular no-fly zone, and D_{no-fly} represents the fifth distance.

C12: Determine, in a case that the fifth distance is greater than a sum of a second radius and the second boundary distance threshold, that the current flight path point meets the first circular no-fly condition.

The second radius is a radius of the circular no-fly zone, and the second radius is denoted as R_{no-fly}.

That is, D_{authorize}>R_{no-fly}+d2, and this indicates that the current flight path point meets the first circular no-fly condition. d2 represents the second boundary distance threshold.

C13: Determine, in a case that the fifth distance is less than the second radius, that the current flight path point meets the second circular no-fly condition.

That is, D_{authorize}<R_{no-fly}, and this indicates that the current flight path point meets the second circular no-fly condition.

C14: Determine, in a case that the fifth distance is greater than or equal to the second radius and is less than or equal to the sum of the second radius and the second boundary distance threshold, that the current flight path point meets the third circular no-fly condition.

That is, R_{no-fly}≤D_{authorize}≤R_{no-fly}+d2, and this indicates that the current flight path point meets the third circular no-fly condition.

In a case that the current flight path point meets the foregoing first circular no-fly condition, step C2 is performed. In a case that the current flight path point meets the second circular no-fly condition, step C4 is performed. In a case that the current flight path point meets the third circular no-fly condition, step C5 is performed.

C2: Verify a relative position relationship between the current flight path point and the polygonal no-fly zone.

The relative position relationship between the current flight path point and the polygonal no-fly zone includes the following three cases. 1. The current flight path point is located outside the polygonal no-fly zone and the second shortest distance is greater than or equal to the second boundary distance threshold. 2. The current flight path point is located within the polygonal no-fly zone. 3. The current flight path point is located outside the polygonal no-fly zone and the second shortest distance is less than the second boundary distance threshold.

That the current flight path point is located outside the polygonal no-fly zone and the second shortest distance is greater than or equal to the second boundary distance threshold is referred to as a first polygonal no-fly condition. That the current flight path point is located within the polygonal no-fly zone is referred to as a second polygonal no-fly condition. That the current flight path point is located outside the polygonal no-fly zone and the second shortest distance is less than the second boundary distance threshold is referred to as a third polygonal no-fly condition.

The second shortest distance is a shortest distance between the current flight path point and a boundary of the polygonal no-fly zone, and the second shortest distance is denoted as d_nofly_min.

Specifically, whether the current flight path point is located within the polygonal no-fly zone is determined; and if the current flight path point is located within the polygonal no-fly zone, it represents that the current flight path point meets the foregoing second polygonal no-fly condition; if the current flight path point is located outside the polygonal no-fly zone, the second shortest distance is obtained by calculating a shortest distance between the current flight path point and the boundary of the polygonal no-fly zone, whether the second shortest distance is greater than or equal to the second boundary distance threshold is determined, and if the second shortest distance is greater than or equal to the second boundary distance threshold, that is, d_nofly_min≥d2, it represents that the current flight path point meets the foregoing first polygonal no-fly condition; or if the second shortest distance is less than the second boundary distance threshold, that is, d_nofly_min<d2, it represents that the current flight path point meets the foregoing third polygonal no-fly condition.

For a principle of determining whether the current flight path point is located within the polygonal zone and calculating a shortest distance between the current flight path point and the boundary of the polygonal zone, refer to description of the foregoing step B2, and details are not described herein again.

In a case that the current flight path point conforms to the foregoing first polygonal no-fly condition, step C3 is performed. In a case that the current flight path point meets the foregoing second polygonal no-fly condition, step C4 is performed. In a case that the current flight path point meets the foregoing third polygonal no-fly condition, step C5 is performed.

C3: Determine that the current flight path point is located outside the no-fly zone and the second distance is greater than or equal to the second boundary distance threshold.

C4: Determine that the current flight path point is located within the no-fly zone.

C5: Determine that the current flight path point is located outside the no-fly zone and the second distance is less than the second boundary distance threshold.

It can be seen that the current flight path point conforms to the foregoing first no-fly position relationship in a case that the current flight path point meets the foregoing first circular no-fly condition and the foregoing first polygonal no-fly condition; and the current flight path point conforms to the foregoing second no-fly position relationship in a case that the current flight path point meets the foregoing second circular no-fly condition, the foregoing third circular no-fly condition, the foregoing second polygonal no-fly condition, or the foregoing third polygonal no-fly condition.

In the foregoing steps C1 to C5, the relative position relationship between the current flight path point and the circular no-fly zone is first verified, and then the relative position relationship between the current flight path point and the polygonal no-fly zone is verified. This helps reduce a verification computational load and improve a verification speed.

It may be understood that the relative position relationship between the current flight path point and the polygonal no-fly zone may be first verified alternatively, and then the relative position relationship between the current flight path point and the circular no-fly zone is verified, to verify the relative position relationship between the current flight path point and the no-fly zone. This is not limited in this application.

It may be understood that the relative position relationship between the current flight path point and the no-fly zone may be verified with reference to the manner described in the foregoing steps C1 and C2 respectively in a case that the no-fly zone includes only the circular no-fly zone or the polygonal no-fly zone.

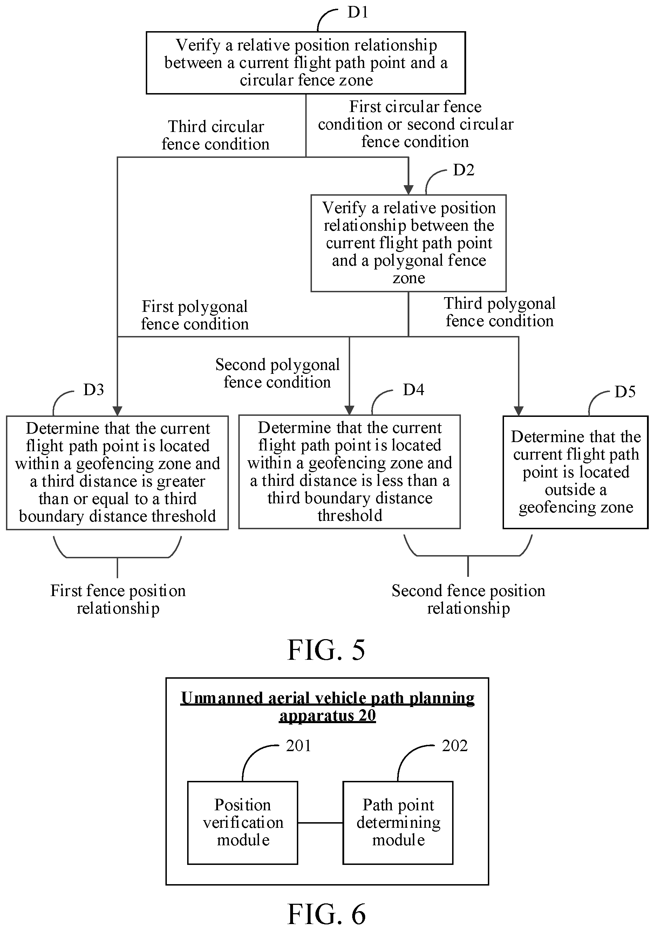

In some embodiments, the geofencing zone includes a circular geofencing zone and a polygonal geofencing zone. In a procedure shown in FIG. 5, the verifying a relative position relationship between the current flight path point and a geofencing zone includes the following steps.

D1: Verify a relative position relationship between the current flight path point and the circular fence zone.

The relative position relationship between the current flight path point and the circular fence zone includes the following three cases. 1. The current flight path point is located outside the circular fence zone. 2. The current flight path point is located within the circular fence zone and a distance between the current flight path point and a boundary of the circular fence zone is less than the third boundary distance threshold. 3. The current flight path point is located within the circular fence zone and the distance between the current flight path point and the boundary of the circular fence zone is greater than or equal to the third boundary distance threshold.

That the current flight path point is located outside the circular fence zone is referred to as a first circular fence condition. That the current flight path point is located within the circular fence zone and a distance between the current flight path point and a boundary of the circular fence zone is less than the third boundary distance threshold is referred to as a second circular fence condition. That the current flight path point is located within the circular fence zone and the distance between the current flight path point and the boundary of the circular fence zone is greater than or equal to the third boundary distance threshold is referred to as a third circular fence condition.

In a feasible implementation, the relative position relationship between the current flight path point and the circular fence zone is verified through the following steps D11 to D14.

D11: Calculate a distance between the current flight path point and a center of the circular fence zone, to obtain a fourth distance.

The fourth distance may be obtained by calculating the distance between the current flight path point and the center of the circular fence zone through the following formula: ${D}_{fence} = \sqrt[2]{{\left({x}_{p}-{x}_{fence}\right)}^{2} + {\left({y}_{p}-{y}_{fence}\right)}^{2}}$ (x_{fence}, y_{fence}) represents position coordinates of the center of the circular fence zone, and D_{fence} represents the fourth distance.

D12: Determine, in a case that the fourth distance is greater than a first radius, that the current flight path point meets the first circular fence condition.

The first radius is a radius of the circular fence zone, and the first radius is denoted as R_{fence}.

That is, D_{authorize}>R_{fence}, and this indicates that the current flight path point meets the first circular fence condition.

D13: Determine, in a case that the fourth distance is greater than a first difference and is less than or equal to the first radius, that the current flight path point meets the second circular fence condition.

The first difference is a difference between the first radius and the third boundary distance threshold, and the first difference is denoted as Δd2. Δd2= R_{fence}-d3. d3 represents the first boundary distance threshold.

That is, R_{fence}-d3<D_{fence}≤R_{fence}, and this indicates that the current flight path point meets the second circular fence condition.

D14: Determine, in a case that the fourth distance is less than or equal to the first difference, that the current flight path point meets the third circular fence condition.

That is, D_{fence} ≤R_{fence}-d3, and this indicates that the current flight path point meets the third circular fence condition.

In a case that the current flight path point meets the foregoing first circular fence condition or the foregoing second circular fence condition, D2 is performed. In a case that the current flight path point meets the foregoing third circular fence condition, step D3 is performed.

D2: Verify a relative position relationship between the current flight path point and the polygonal fence zone.

The relative position relationship between the current flight path point and the polygonal fence zone includes the following three cases. 1. The current flight path point is located within the polygonal fence zone and the first shortest distance is greater than or equal to the third boundary distance threshold. 2. The current flight path point is located within the polygonal fence zone and the first shortest distance is less than the third boundary distance threshold. 3. The current flight path point is located outside the polygonal fence zone.

That the current flight path point is located within the polygonal fence zone and the first shortest distance is greater than or equal to the third boundary distance threshold is referred to as a first polygonal fence condition. That the current flight path point is located within the polygonal fence zone and the first shortest distance is less than the third boundary distance threshold is referred to as a second polygonal fence condition. That the current flight path point is located outside the polygonal fence zone is referred to as a third polygonal fence condition.

The first shortest distance is a shortest distance between the current flight path point and a boundary of the polygonal fence zone, and the first shortest distance is denoted as d_fence_min.

Specifically, whether the current flight path point is located within the polygonal fence zone is determined; and if the current flight path point is located within the polygonal fence zone, the first shortest distance is obtained by calculating a shortest distance between the current flight path point and the boundary of the polygonal fence zone, whether the first shortest distance is greater than or equal to the third boundary distance threshold is determined, and if the first shortest distance is greater than or equal to the third boundary distance threshold, that is, d_fence_min≥d3, it represents that the current flight path point meets the foregoing first polygonal fence condition; if the first shortest distance is less than the third boundary distance threshold, that is, d_fence_min<d3, it represents that the current flight path point meets the foregoing second polygonal fence condition; or if the current flight path point is located outside the polygonal fence zone, it represents that the current flight path point meets the foregoing third polygonal fence condition.

For a principle of determining whether the current flight path point is located within the polygonal zone and calculating a shortest distance between the current flight path point and the boundary of the polygonal zone, refer to description of the foregoing step B2, and details are not described herein again.

In a case that the current flight path point meets the first polygonal fence condition, step D3 is performed. In a case that the current flight path point meets the second polygonal fence condition, step D4 is performed. In a case that the current flight path point meets the third polygonal fence condition, step D5 is performed.

D3: Determine that the current flight path point is located within the geofencing zone and the third distance is greater than or equal to the third boundary distance threshold.

D4: Determine that the current flight path point is located within the geofencing zone and the third distance is less than the third boundary distance threshold.

D5: Determine that the current flight path point is located outside the geofencing zone.

It can be seen that the current flight path point conforms to the foregoing first fence position relationship in a case that the current flight path point meets the foregoing third circular fence condition or the foregoing first polygonal no-fly condition; and the current flight path point conforms to the foregoing second fence position relationship in a case that the current flight path point meets the foregoing first circular fence condition or the foregoing second circular fence condition and the foregoing second polygonal no-fly condition or the foregoing third polygonal no-fly condition.

In the foregoing steps D1 to D5, the relative position relationship between the current flight path point and the circular fence zone is first verified, and then the relative position relationship between the current flight path point and the polygonal fence zone is verified. This helps reduce a verification computational load and improve a verification speed.

It may be understood that the relative position relationship between the current flight path point and the polygonal fence zone may be first verified alternatively, and then the relative position relationship between the current flight path point and the circular fence zone is verified, to verify the relative position relationship between the current flight path point and the geofencing zone. This is not limited in this application.

It may be understood that the relative position relationship between the current flight path point and the geofencing zone may be verified with reference to the manner described in the foregoing steps D1 and D2 respectively in a case that the geofencing zone includes only the circular fence zone or the polygonal fence zone.

The method in this application is described above, and an apparatus in this application is described below.

FIG. 6 is a schematic structural diagram of an apparatus for planning a flight path of an unmanned aerial vehicle according to an embodiment of this application. As shown in FIG. 6, the apparatus 20 for planning a flight path of an unmanned aerial vehicle includes:
a position verification module 201, configured to verify a relative position relationship between a current flight path point of an unmanned aerial vehicle and an authorized zone, where permission of the authorized zone is higher than permission of a no-fly zone; and
a path point determining module 202, configured to determine the current flight path point as a flyable path point in a case that the current flight path point conforms to a first authorization position relationship, where the first authorization position relationship includes that the current flight path point is located within the authorized zone and a first distance is greater than or equal to a first boundary distance threshold, where the first distance is a distance between the current flight path point and a boundary of the authorized zone.

It should be noted that, the foregoing apparatus 20 for planning a flight path of an unmanned aerial vehicle may perform the foregoing method for planning a flight path of an unmanned aerial vehicle provided in the implementation of this application, and have the corresponding functional modules for performing the method and beneficial effects. For technical details not illustrated in the implementation, refer to the method for planning a flight path of an unmanned aerial vehicle provided in the implementation of this application.

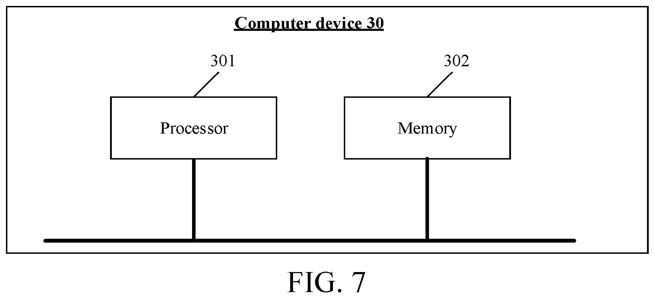

FIG. 7 is a schematic structural diagram of a computer device according to an embodiment of this application. The computer device 30 includes a processor 301 and a memory 302. The memory 302 is connected to the processor 301. The memory 302 is connected to the processor 301 through, for example, a bus.

The processor 301 is configured to support the computer device 30 in performing corresponding functions in the foregoing method in the foregoing method embodiments. The processor 301 may be a central processing unit (CPU), a network processor (NP), a hardware chip, or any combination thereof. The hardware chip may be an application specific integrated circuit (ASIC), a programmable logic device (PLD), or a combination thereof. The PLD may be a complex programmable logic device (CPLD), a field-programmable gate array (FPGA), a generic array logic (GAL), or any combination thereof.

The memory 302 is configured to store program code and the like. The memory 302 may include a volatile memory (VM) such as a random access memory (RAM). The memory 302 may also include a non-volatile memory (NVM) such as a read-only memory (ROM), a flash memory, a hard disk drive (HDD), or a solid-state drive (SSD). The memory 302 may alternatively include a combination of the foregoing types of memories.

The memory 302 is configured to store a non-volatile software program, a non-volatile computer executable program, and a module, such as a program instruction/module corresponding to the method for planning a flight path of an unmanned aerial vehicle in the embodiment of this application. The processor executes various functional applications and data processing of the method for planning a flight path of an unmanned aerial vehicle by running the non-volatile software program, the instruction, and the module stored in the memory, that is, implements the functions of the method for planning a flight path of an unmanned aerial vehicle provided in the above method embodiments.

The memory 302 may include a program storage area and a data storage area. The program storage area may store an operating system and an application program that is required for at least one function. The data storage area may store data and the like created according to use of the apparatus for planning a flight path of an unmanned aerial vehicle. In some embodiments, the memory may include memories remotely disposed relative to the processor, and these remote memories may be connected to the apparatus for planning a flight path of an unmanned aerial vehicle by using a network. The foregoing examples of the network include, but are not limited to, the Internet, an intranet, a local area network, a mobile communication network, and a combination thereof.

The one or more modules are stored in the memory, and when executed by the one or more processors, perform the method for planning a flight path of an unmanned aerial vehicle in any of the foregoing method embodiments, for example, perform the method steps described in the foregoing method embodiments and implement the functions of the modules described in the foregoing apparatus embodiments.

An embodiment of this application further provides a computer-readable storage medium, storing a computer program, where the computer program includes program instructions, and the program instructions, when executed by a computer, cause the computer to perform the method described in the foregoing embodiments.

A person of ordinary skill in the art may understand that all or some of the procedures of the methods of the foregoing embodiments may be implemented by a computer program instructing relevant hardware. The program may be stored in a computer-readable storage medium. When the program is executed, the procedures of the foregoing method embodiments may be implemented. The foregoing storage medium may be a magnetic disk, an optical disc, a read-only memory (ROM), a random access memory (RAM), or the like.

What is disclosed above is merely exemplary embodiments of this application, and certainly is not intended to limit the protection scope of this application. Therefore, equivalent variations made in accordance with the claims of this application shall fall within the scope of this application.

## Claims

1. A method for planning a flight path of an unmanned aerial vehicle, comprising:
verifying a relative position relationship between a current flight path point of the unmanned aerial vehicle and an authorized zone, wherein permission of the authorized zone is higher than permission of a no-fly zone; and
determining the current flight path point as a flyable path point in a case that the current flight path point conforms to a first authorization position relationship, wherein the first authorization position relationship comprises that the current flight path point is located within the authorized zone and a first distance is greater than or equal to a first boundary distance threshold, wherein the first distance is a distance between the current flight path point and a boundary of the authorized zone.

2. The method according to claim 1, further comprising:
verifying a relative position relationship between the current flight path point and the no-fly zone in a case that the current flight path point conforms to a second authorization position relationship, wherein the second authorization position relationship comprises that the current flight path point is located outside the authorized zone; or the current flight path point is located within the authorized zone and the first distance is less than the first boundary distance threshold;
verifying a relative position relationship between the current flight path point and a geofencing zone in a case that the current flight path point conforms to a first no-fly position relationship, wherein permission of the geofencing zone is lower than the permission of the no-fly zone; and the first no-fly position relationship comprises that the current flight path point is located outside the no-fly zone and a second distance is greater than or equal to a second boundary distance threshold, wherein the second distance is a distance between the current flight path point and a boundary of the no-fly zone; and
determining the current flight path point as the flyable path point in a case that the current flight path point conforms to a first fence position relationship, wherein the first fence position relationship comprises that the current flight path point is located within the geofencing zone and a third distance is greater than or equal to a third boundary distance threshold, wherein the third distance is a distance between the current flight path point and a boundary of the geofencing zone.

3. The method according to claim 2, further comprising:
determining the current flight path point as a no-fly path point in a case that the current flight path point conforms to a second no-fly position relationship or a second fence position relationship, wherein
the second no-fly position relationship comprises that the current flight path point is located within the no-fly zone; or the current flight path point is located outside the no-fly zone and the second distance is less than the second boundary distance threshold; and
the second fence position relationship comprises that the current flight path point is located outside the geofencing zone; or the current flight path point is located within the geofencing zone and the third distance is less than the third boundary distance threshold.

4. The method according to claim 3, further comprising:
in a case that the current flight path point conforms to the second fence position relationship:
outputting a first alarm prompt if the current flight path point is located within the authorized zone and the first distance is less than the first boundary distance threshold, wherein the first alarm prompt is used for representing that the current flight path point is close to the boundary of the authorized zone; or
when the condition in which the current flight path point is located within the authorized zone and the first distance is less than the first boundary distance threshold is not met, outputting a second alarm prompt if the current flight path point is located within the geofencing zone and the third distance is less than the third boundary distance threshold, wherein the second alarm prompt is used for representing that the current flight path point is close to the boundary of the geofencing zone; or controlling the unmanned aerial vehicle to return if the current flight path point is located outside the geofencing zone.

5. The method according to claim 3, further comprising:
in a case that the current flight path point conforms to the second no-fly position relationship:
outputting a first alarm prompt if the current flight path point is located within the authorized zone and the first distance is less than the first boundary distance threshold, wherein the first alarm prompt is used for representing that the current flight path point is close to the boundary of the authorized zone; or
when the condition in which the current flight path point is located within the authorized zone and the first distance is less than the first boundary distance threshold is not met, outputting a third alarm prompt if the current flight path point is located outside the no-fly zone and the second distance is less than the second boundary distance threshold, wherein the third alarm prompt is used for representing that the current flight path point is close to the boundary of the no-fly zone; or prohibiting the unmanned aerial vehicle from flying if the current flight path point is located within the no-fly zone.

6. The method according to claim 2, wherein the geofencing zone comprises a circular fence zone and a polygonal fence zone; and
the verifying a relative position relationship between the current flight path point and a geofencing zone comprises:
verifying a relative position relationship between the current flight path point and the circular fence zone;
verifying a relative position relationship between the current flight path point and the polygonal fence zone in a case that the current flight path point meets a first circular fence condition or a second circular fence condition, wherein the first circular fence condition comprises that the current flight path point is located outside the circular fence zone; and the second circular fence condition comprises that the current flight path point is located within the circular fence zone and a distance between the current flight path point and a boundary of the circular fence zone is less than the third boundary distance threshold;
determining, in a case that the current flight path point meets a first polygonal fence condition, that the current flight path point is located within the geofencing zone and the third distance is greater than or equal to the third boundary distance threshold, wherein the first polygonal fence condition comprises that the current flight path point is located within the polygonal fence zone and a first shortest distance is greater than or equal to the third boundary distance threshold, wherein the first shortest distance is a shortest distance between the current flight path point and a boundary of the polygonal fence zone; and
determining, in a case that the current flight path point meets a third circular fence condition, that the current flight path point is located within the geofencing zone and the third distance is greater than or equal to the third boundary distance threshold, wherein the third circular fence condition comprises that the current flight path point is located within the circular fence zone and the distance between the current flight path point and the boundary of the circular fence zone is greater than or equal to the third boundary distance threshold.

7. The method according to claim 6, wherein the verifying a relative position relationship between the current flight path point and a geofencing zone further comprises:
determining, in a case that the current flight path point meets a second polygonal fence condition, that the current flight path point is located within the geofencing zone and the third distance is less than the third boundary distance threshold, wherein the second polygonal fence condition comprises that the current flight path point is located within the polygonal fence zone and the first shortest distance is less than the third boundary distance threshold; and
determining, in a case that the current flight path point meets a third polygonal fence condition, that the current flight path point is located outside the geofencing zone, wherein the third polygonal fence condition comprises that the current flight path point is located outside the polygonal fence zone.

8. The method according to claim 6, wherein the verifying a relative position relationship between the current flight path point and the circular fence zone comprises:
calculating a distance between the current flight path point and a center of the circular fence zone, to obtain a fourth distance;
determining, in a case that the fourth distance is greater than a first radius, that the current flight path point meets the first circular fence condition, wherein the first radius is a radius of the circular fence zone;
determining, in a case that the fourth distance is greater than a first difference and is less than or equal to the first radius, that the current flight path point meets the second circular fence condition, wherein the first difference is a difference between the first radius and the third boundary distance threshold; and
determining, in a case that the fourth distance is less than or equal to the first difference, that the current flight path point meets the third circular fence condition.

9. The method according to claim 2, wherein the no-fly zone comprises a circular no-fly zone and a polygonal no-fly zone; and
the verifying a relative position relationship between the current flight path point and a geofencing zone comprises:
verifying a relative position relationship between the current flight path point and the circular no-fly zone;
verifying a relative position relationship between the current flight path point and the polygonal no-fly zone in a case that the current flight path point meets a first circular no-fly condition, wherein the first circular no-fly condition comprises that the current flight path point is located outside the circular no-fly zone and a distance between the current flight path point and a boundary of the circular no-fly zone is greater than the second boundary distance threshold; and
determining, in a case that the current flight path point conforms to a first polygonal no-fly condition, that the current flight path point is located outside the no-fly zone and the second distance is greater than or equal to the second boundary distance threshold, wherein the first polygonal no-fly condition comprises that the current flight path point is located outside the polygonal no-fly zone and a second shortest distance is greater than or equal to the second boundary distance threshold, wherein the second shortest distance is a shortest distance between the current flight path point and a boundary of the polygonal no-fly zone.

10. The method according to claim 9, wherein the verifying a relative position relationship between the current flight path point and a geofencing zone further comprises:
determining, in a case that the current flight path point meets a second circular no-fly condition or a second polygonal no-fly condition, that the current flight path point is located within the no-fly zone, wherein the second circular no-fly condition comprises that the current flight path point is located within the circular no-fly zone; and the second polygonal no-fly condition comprises that the current flight path point is located within the polygonal no-fly zone; and
determining, in a case that the current flight path point meets a third circular no-fly condition or a third polygonal no-fly condition, that the current flight path point is located outside the no-fly zone and the second distance is less than the second boundary distance threshold, wherein the third circular no-fly condition comprises that the current flight path point is located outside the circular no-fly zone and the distance between the current flight path point and the boundary of the circular no-fly zone is less than the second boundary distance threshold; and the third polygonal no-fly condition comprises that the current flight path point is located outside the polygonal no-fly zone and the second shortest distance is less than the second boundary distance threshold.

11. The method according to claim 9, wherein the verifying a relative position relationship between the current flight path point and the circular no-fly zone comprises:
calculating a distance between the current flight path point and a center of the circular no-fly zone, to obtain a fifth distance;
determining, in a case that the fifth distance is greater than a sum of a second radius and the second boundary distance threshold, that the current flight path point meets the first circular no-fly condition, wherein the second radius is a radius of the circular no-fly zone;
determining, in a case that the fifth distance is less than the second radius, that the current flight path point meets a second circular no-fly condition; and
determining, in a case that the fifth distance is greater than or equal to the second radius and is less than or equal to the sum of the second radius and the second boundary distance threshold, that the current flight path point meets a third circular no-fly condition.

12. The method according to any one of claims 1 to 11, wherein the authorized zone comprises a circular authorized zone; and the verifying a relative position relationship between a current flight path point of an unmanned aerial vehicle and an authorized zone comprises:
calculating a distance between the current flight path point and a center of the circular authorized zone, to obtain a sixth distance;
determining, in a case that the sixth distance is less than or equal to a second difference, that the current flight path point is located within the authorized zone and the first distance is greater than or equal to the first boundary distance threshold, wherein the second difference is a difference between a third radius and the first boundary distance threshold, wherein the third radius is a radius of the circular authorized zone;
determining, in a case that the sixth distance is greater than the second difference and is less than or equal to the third radius, that the current flight path point is located within the authorized zone and the first distance is less than the first boundary distance threshold; and
determining, in a case that the sixth distance is greater than the third radius, that the current flight path point is located outside the authorized zone.

13. The method according to any one of claims 1 to 11, wherein the authorized zone comprises a circular authorized zone and a polygonal authorized zone; and
the verifying a relative position relationship between a current flight path point of an unmanned aerial vehicle and an authorized zone comprises:
verifying a relative position relationship between the current flight path point and the circular authorized zone;
verifying a relative position relationship between the current flight path point and the polygonal authorized zone in a case that the current flight path point meets a first circular authorization condition or a second circular authorization condition, wherein the first circular authorization condition comprises that the current flight path point is located outside the circular authorized zone; and the second circular authorization condition comprises that the current flight path point is located within the circular authorized zone and a distance between the current flight path point and a boundary of the circular authorized zone is less than the first boundary distance threshold;
determining, in a case that the current flight path point meets a first polygonal authorization condition, that the current flight path point is located within the authorized zone and the first distance is greater than or equal to the first boundary distance threshold, wherein the first polygonal authorization condition comprises that the current flight path point is located within the polygonal authorized zone and a third shortest distance is greater than or equal to the first boundary distance threshold, wherein the third shortest distance is a shortest distance between the current flight path point and a boundary of the polygonal authorized zone; and
determining, in a case that the current flight path point meets a third circular authorization condition, that the current flight path point is located within the authorized zone and the first distance is greater than or equal to the first boundary distance threshold, wherein the third circular authorization condition comprises that the current flight path point is located within the circular authorized zone and the distance between the current flight path point and the boundary of the circular authorized zone is greater than or equal to the first boundary distance threshold.

14. The method according to claim 13, further comprising:
determining, in a case that the current flight path point meets a second polygonal authorization condition, that the current flight path point is located within the authorized zone and the first distance is less than the first boundary distance threshold, wherein the second polygonal authorization condition comprises that the current flight path point is located within the polygonal authorized zone and the third shortest distance is less than the first boundary distance threshold; and
determining, in a case that the current flight path point meets a third polygonal authorization condition, that the current flight path point is located outside the authorized zone, wherein the third polygonal authorization condition comprises that the current flight path point is located outside the polygonal authorized zone.

15. An apparatus for planning a flight path of an unmanned aerial vehicle, comprising:
a position verification module, configured to verify a relative position relationship between a current flight path point of the unmanned aerial vehicle and an authorized zone, wherein permission of the authorized zone is higher than permission of a no-fly zone; and
a path point determining module, configured to determine the current flight path point as a flyable path point in a case that the current flight path point conforms to a first authorization position relationship, wherein the first authorization position relationship comprises that the current flight path point is located within the authorized zone and a first distance is greater than or equal to a first boundary distance threshold, wherein the first distance is a distance between the current flight path point and a boundary of the authorized zone.

16. A computer device, comprising a memory and a processor, wherein the memory is connected to the processor, the processor is configured to execute one or more computer programs stored in the memory, and when the processor executes the one or more computer programs, the computer device is caused to perform the method according to any one of claims 1 to 14.

17. A computer-readable storage medium, storing a computer program, wherein the computer program comprises program instructions, and when the program instructions are executed by a processor, the processor is caused to perform the method according to any one of claims 1 to 14.
